# EUROPÄISCHE PATENTSCHRIFT

(11) **EP 2 050 992 B1**
(45) Veröffentlichungstag und Bekanntmachung des Hinweises auf die Patenterteilung: **12.06.2013**
(21) Anmeldenummer: 08016258.9
(22) Anmeldetag: 16.09.2008
(51) Int. Cl.: F16K 17/04, F16K 17/08, F16K 17/10

(54) **Ventileinrichtung**
Valve device
Dispositif d'aération

(30) Priorität: 19.10.2007 DE 102007051029
(43) Veröffentlichungstag der Anmeldung: 22.04.2009
(73) Patentinhaber: FESTO AG & Co. KG, 73734 Esslingen (DE)
(72) Erfinder: Ilmberger, Steffen, 72218 Gütlingen (DE); Quendt, Volker, 72669 Unterensingen (DE); Danner, Tobias, 73760 Ostfildern (DE)
(74) Vertreter: Vogler, Bernd

(56) Entgegenhaltungen:
- DE-A1- 4 133 424
- US-A- 2 962 045

## Beschreibung

Die Erfindung betrifft eine Ventileinrichtung, mit einem Ventilgehäuse, in dem sich ein Einlasskanal für Druckfluid erstreckt, der in eine Ventilkammer mündet, in der ein Ventilglied mittels Federmitteln in einer Schließstellung in Anlage an einen Ventilsitz gehalten ist, wobei sich das Ventilglied bei einem definierten Öffnungsdruck des anstehenden Druckfluids öffnet, wodurch Druckfluid über einen Öffnungsquerschnitt zu einem Fluidauslass gelangt und von dort ausströmt, wobei die Ventileinrichtung einen mit dem Einlasskanal verbundenen Steuerkanal aufweist, über den Druckfluid in eine Steuerkammer gelangt, in der ein Steuerglied mittels Federmitteln in einer Offenstellung von einem Steuersitz abgehoben gehalten ist, wobei die Steuerkammer über einen Verbindungskanal mit der Ventilkammer verbunden ist und wobei das Steuerglied das Abströmen des Druckfluids derart steuert, dass das Steuerglied vor dem Öffnen des Ventilglieds bei einem unter dem Öffnungsdruck liegenden Steuerdruck in Anlage an seinen Steuersitz bewegbar ist, wodurch der Fluiddurchgang zwischen Steuerkammer und Ventilkammer gesperrt ist, und dass in einer Offenstellung des Ventilglieds und Abströmen des Druckfluids über die Ventilkammer das Steuerglied bei Druckabfall unter den Steuerdruck in seine Offenstellung bewegt und der Verbindungskanal geöffnet wird, wodurch Druckfluid auch über die Steuerkammer abströmen kann.

Derartige Ventileinrichtungen werden auch als Überdruckventile bezeichnet und sind seit langem bekannt, siche beispielsweise DE 41 33 424 A1.

An der GB 1 477 238 ist ein weiteres Überdruckventil beschrieben, das einen Einlass aufweist, der mit einer ersten Druckkammer verbunden ist. Die Druckkammer wird mit einem Ventilglied verschlossen, das in seiner Schließstellung mittels Federmitteln in Anlage an einen Ventilsitz gehalten ist. Wird ein Öffnungsdruck erreicht, so hebt sich das Ventilglied vom Ventilsitz ab, wodurch die erste Druckkammer mit einer Auslasskammer verbunden wird, von wo aus Druckfluid abströmen kann.

Auch die US 5, 050, 637 zeigt ein derartiges Überdruckventil.

Überdruckventile sind Systemen zugeordnet, die unter Betriebsdruck arbeiten oder in denen ein Betriebsdruck herrscht. Wird der maximal zulässig Betriebsdruck überschritten, also ein Öffnungsdruck erreicht, so öffnet das Überdruckventil, wodurch Druck abgebaut werden kann. Neben dem schnellen Öffnen mit ausreichendem Öffnungsquerschnitt für ausreichend schnellen Druckabbau ist auch der Schließvorgang des Überdruckventils von Bedeutung. Bei herkömmlichen Überdruckventilen ist das Schließverhalten nicht beeinflussbar, wodurch sich das Überdruckventil in nachteiliger Weise erst relativ spät schließt, was einen unerwünschten Druckabfall im System zur Folge hat. Das späte Schließen des Überdruckventils wird vor allem dadurch verursacht, dass bei geöffnetem Ventilglied das Druckfluid in der Regel an einer größeren Fläche ansteht, als bei geschlossenem Ventilglied, mit der Folge dass ein gegenüber dem Öffnungsdruck geringerer Haltedruck ausreicht, um das Ventilglied in seiner Offenstellung zu halten. Erst wenn dieser Haltedruck unterschritten wird, schließt das Ventilglied wieder.

In der DE 41 33 424 A1 ist ein Vollhubsicherheitsventil offenbart, das einen federbelasteten Stufenkolben besitzt, der durch Federkraft in Anlage an eine Sicherheitsventilsitzfläche gehalten ist. Ferner ist ein Steuerventil vorgesehen, mit einem Steuerventilstößel, wobei der Regelraum des Steuerventils über eine Verbindungsbohrung mit dem Ringraum unterhalb des Stufenkolbens verbunden ist. Beim Schließen des Ventils wird der im Ringraum vorherrschende Druck über das geöffnete Steuerventil und die Verbindungsbohrungen abgeblasen, was zu einem Schnellschließvorgang führt.

Aufgabe der Erfindung ist es daher, eine Ventileinrichtung der eingangs erwähnten Art zu schaffen, mit dem sich das Schließverhalten der Ventileinrichtung beeinflussen lässt, insbesondere ein schnelles Schließen des Ventilglieds möglich ist.

Diese Aufgabe wird durch eine Ventileinrichtung mit den Merkmalen des unabhängigen Anspruchs 1 gelöst. Weiterbildungen der Erfindung sind in den Unteransprüchen dargestellt.

Die erfindungsgemäße Ventileinrichtung zeichnet sich dadurch aus, dass der für die abströmende Menge an Druckfluid maßgebliche Öffnungsquerschnitt durch einen Spalt zwischen der Außenwand des Ventilglieds und der Innenwand der Ventilkammer definiert ist, wobei die Innenwand der Ventilkammer und die Außenwand des Ventilglieds derart aufeinander abgestimmt sind, dass das Ventilglied in mehrere Öffnungspositionen mit unterschiedlichen Öffnungsquerschnitten bewegbar und dort haltbar ist.

Das Steuerglied hat also eine dem Ventilglied vorauseilende Funktion, das heißt bevor das Ventilglied öffnet, verschließt das Steuerglied den Fluiddurchgang durch die Steuerkammer und bevor das Ventilglied schließt wird der Fluiddurchgang zwischen Ventilkammer und Steuerkammer geöffnet, so das Druckfluid auch über die Steuerkammer abströmen kann. Durch das Steuerglied lässt sich das Schließverhalten des Ventilglieds beeinflussen und zwar derart, dass bei geöffnetem Steuerglied ein zusätzlicher Druckabbau über die Steuerkammer stattfindet, wodurch der das Ventilglied in seiner Offenstellung haltende Fluiddruck schnell abgebaut wird und das Ventilglied schnell schließen kann.

Der für die abströmende Menge an Druckfluid maßgebliche Öffnungsquerschnitt wird durch einen Spalt zwischen der Außenwand des Ventilglieds und der Innenwand der Ventilkammer definiert. Die Innenwand der Ventilkammer und die Außenwand des Ventilglieds sind derart aufeinander abgestimmt, dass das Ventilglied in mehrere Öffnungspositionen mit unterschiedlichen Öffnungsquerschnitten bewegbar und dort haltbar ist. Beispielsweise ist es möglich, dass sich das Ventilglied zunächst mit einem kleineren Öffnungsquerschnitt öffnet, wodurch zunächst weniger Druckfluid abströmt. Steht ein bestimmter Staudruck am Ventilglied an kann dieses dann in seine größte Öffnungsstellung bewegt und dort gehalten werden. Es ist jedoch auch möglich, dass das Öffnungsverhalten des Ventilglieds derart eingestellt wird, dass schnellstmöglich ein vollständiges Öffnen mit größtem Öffnungsquerschnitt erfolgt.

In bevorzugter Weise weist das Ventilglied einen sich in Richtung Ventilsitz verjüngenden Endabschnitt auf, der mit einem gegenüber dem Rest der Ventilkammer verjüngten Ventilkammer-Endbereich derart korrespondiert, dass bei vom Ventilsitz abgehobenem Ventilglied und Position des Ventilglied-Endabschnitts innerhalb des Ventilkammer-Endbereichs ein kleiner Öffnungsquerschnitt geöffnet ist und bei Position des Ventilglied-Endabschnitts außerhalb des Ventilkammer-Endbereichs ein demgegenüber größerer Öffnungsquerschnitt geöffnet ist.

Bei einer Weiterbildung der Erfindung zweigt der Steuerkanal vom Einlasskanal ab. Alternativ ist es möglich, dass der Steuerkanal einen eigenen Eingang besitzt und die Abzweigung extern erfolgt.

In besonders bevorzugter Weise weist die Ventileinrichtung einen dem Fluidauslass zugeordneten Schalldämpfer auf, der bei abströmendem Druckfluid einen auf die Schließbewegung des Ventilglieds unterstützenden Staudruck aufbaut. Dadurch kann ein in Schließrichtung des Ventilglieds gerichteter Impuls erzeugt werden.

Bei einer Weiterbildung der Erfindung ist eine erste Ventilgliedfläche A1, an der Druckfluid in der Schließstellung des Ventilglieds ansteht, kleiner als eine Steuergliedfläche A2, an der über den Steuerkanal zugeführte Druckfluid am Steuerglied ansteht.

Zweckmäßigerweise beträgt das Flächenverhältnis A1/A2 ungefähr 1:3.

Bei einer Weiterbildung der Erfindung weist das Ventilglied einen von der Querschnittsform der Ventilkammer abweichenden Basisabschnitt auf, wobei zwischen der Außenwand des Basisabschnitts und der Innenwand der Ventilkammer mehrere Abströmkanäle für Druckfluid ausgebildet sind.

Besonders bevorzugt ist das Ventilglied und/oder das Steuerglied plungerartig ausgebildet.

Ein bevorzugtes Ausführungsbeispiel ist in der Zeichnung dargestellt und wird im Folgenden näher erläutert. In der Zeichnung zeigen:
- Figur 1: einen Längsschnitt durch ein bevorzugtes Ausführungsbeispiel der erfindungsgemäßen Ventileinrichtung mit dem Ventilglied in der Schließstellung und dem Steuerglied in der Offenstellung,
- Figur 2: die Ventileinrichtung von Figur 1 mit dem Ventilglied in Schließstellung und dem Steuerglied in Schließstellung,
- Figur 3: die Ventileinrichtung von Figur 1 mit dem Ventilglied in Offenstellung bei kleinem Öffnungsquerschnitt und dem Steuerglied in Schließstellung,
- Figur 3A: eine vergrößerte Darstellung der Einzelheit X von Figur 3,
- Figur 4: die Ventileinrichtung von Figur 1 mit dem Ventilglied in Offenstellung mit großem Öffnungsquerschnitt und dem Steuerglied in Schließstellung,
- Figur 5: die Ventileinrichtung von Figur 1 mit dem Ventilglied in der Offenstellung und dem Steuerglied in der Offenstellung,
- Figur 6: eine mit Figur 1 identische Darstellung, wobei das Ventilglied wieder in seine Schließstellung zurückgekehrt ist,
- Figur 7: eine erste Ausführungsform des Ventilglieds der Ventileinrichtung und
- Figur 8: eine zweite Ausführungsform des Ventilglieds der Ventileinrichtung.

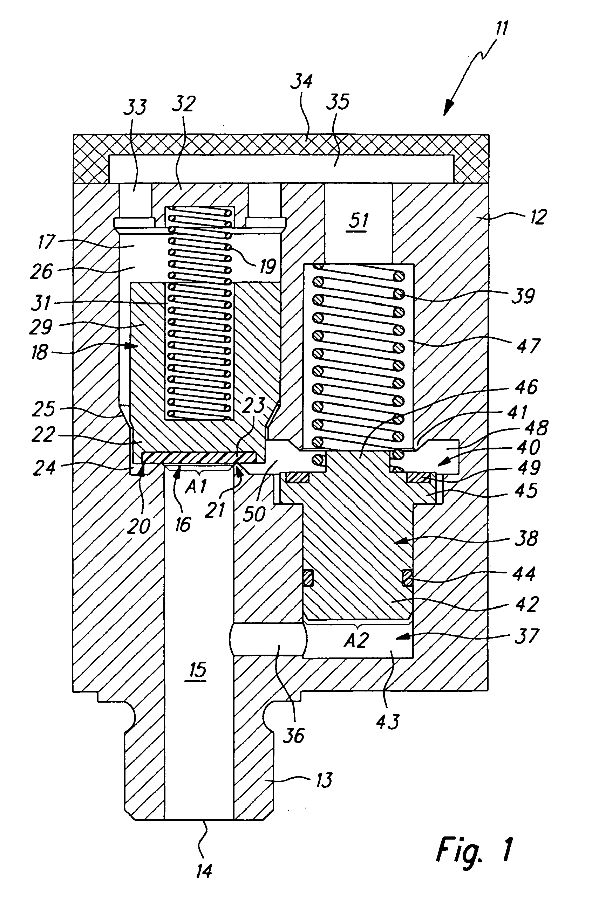

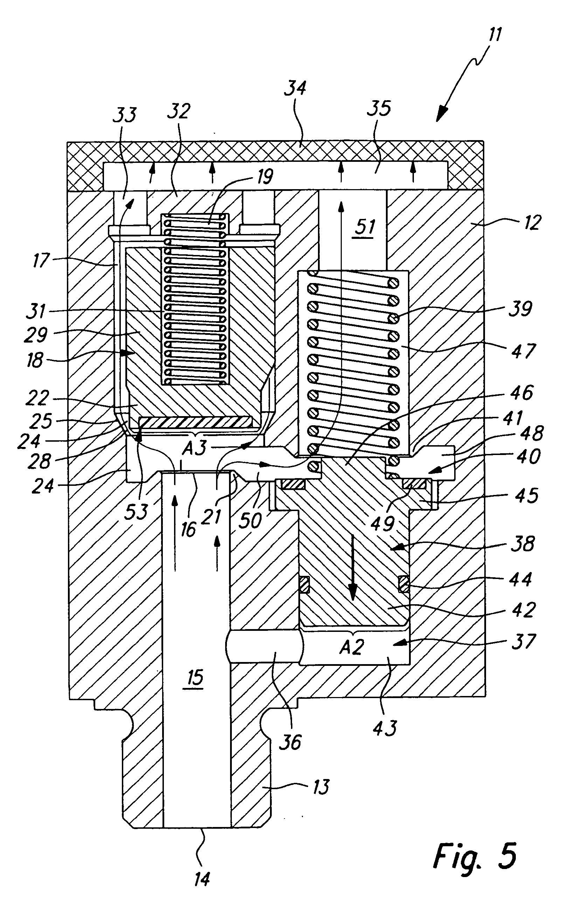

Die Figuren 1 bis 6 zeigen ein bevorzugtes Ausführungsbeispiel der erfindungsgemäßen Ventileinrichtung 11.

Die Ventileinrichtung 11 besitzt ein Ventilgehäuse 12, an dessen Unterseite sich eine gegebenenfalls mit einem Gewinde versehene Anschlusspartie 13 zum Anschluss an ein mit Druckfluid arbeitendes oder unter Druckfluid stehendes System befindet. Bevorzugterweise wird als Druckfluid Druckluft verwendet. Es sind jedoch auch andere gasförmige oder flüssige Medien einsetzbar. Im Folgenden soll die Wirkungsweise jedoch beispielhaft an Hand des Einsatzes von Druckluft beschrieben werden.

An der Anschlusspartie 13 befindet sich eine Einlassöffnung 14 über die Druckluft in einen nachgeordneten Einlasskanal 15 gelangen kann.

Der Einlasskanal 15 mündet über eine Ventilkammer-Öffnung 16 in eine Ventilkammer 17.

In der Ventilkammer 17 befindet sich eine Ventilglied 18 in Form eines Plungers das mittels Federmitteln 19 in einer Schließstellung 20 in Anlage an einen Ventilsitz 21 gehalten ist. Der Ventilsitz 21 befindet sich unmittelbar an der Ventilkammer-Öffnung 16 und wird hier durch eine kleine Erhöhung gebildet.

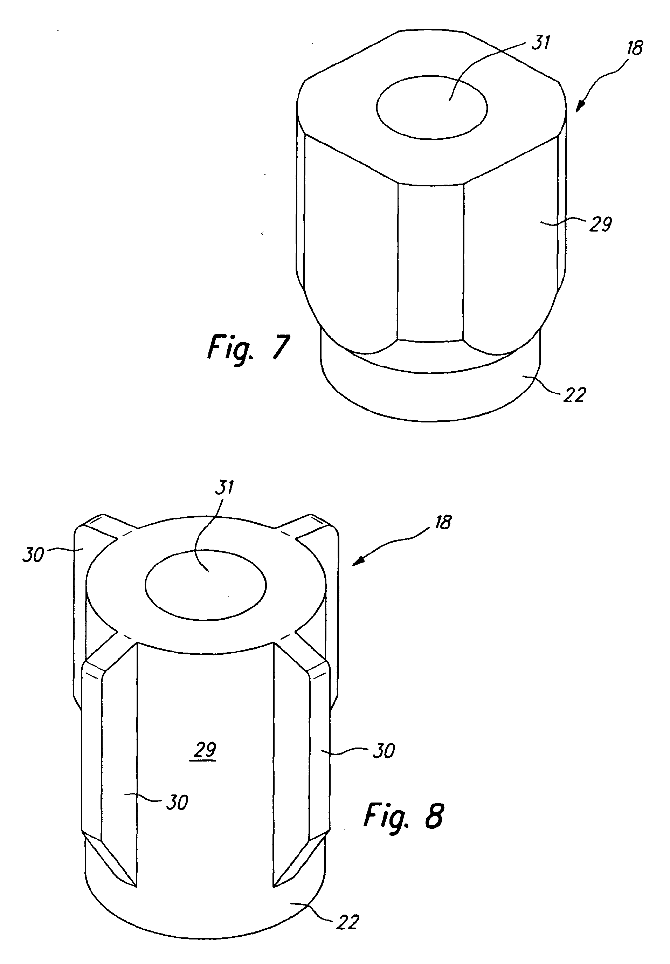

Wie insbesondere in den Figuren 7 und 8 dargestellt, besitzt das Ventilglied 18 einen sich in Richtung Ventilsitz 21 verjüngenden Endabschnitt 22, beispielsweise mit zylindrischer Form. An der Unterseite des Endabschnitts 22 sitzt ein Dichtelement 23, beispielsweise in Form einer Dichtscheibe, die in Schließstellung des Ventilglieds 18 ein fluiddichtes Abdichten der Ventilkammer-Öffnung 16 bewirkt.

Der Endabschnitt 22 des Ventilglieds 18 korrespondiert mit einem gegenüber dem Rest der Ventilkammer 17 verjüngten Ventilkammer-Endbereich 24, insbesondere ebenfalls mit zylindrischer Grundform. An den Ventilkammer-Endbereich 24 schließt sich in Richtung weg vom Ventilsitz 21 ein konusartiger Übergangsabschnitt 25 an, der in einen ebenfalls im Wesentlichen zylindrischen Basisbereich 26 (Fig. 1) der Ventilkammer 17 übergeht.

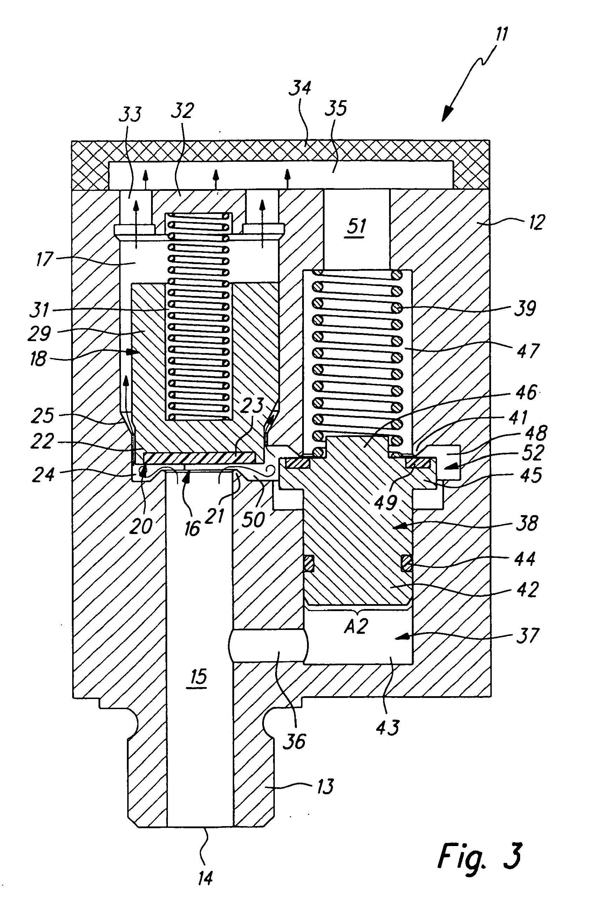

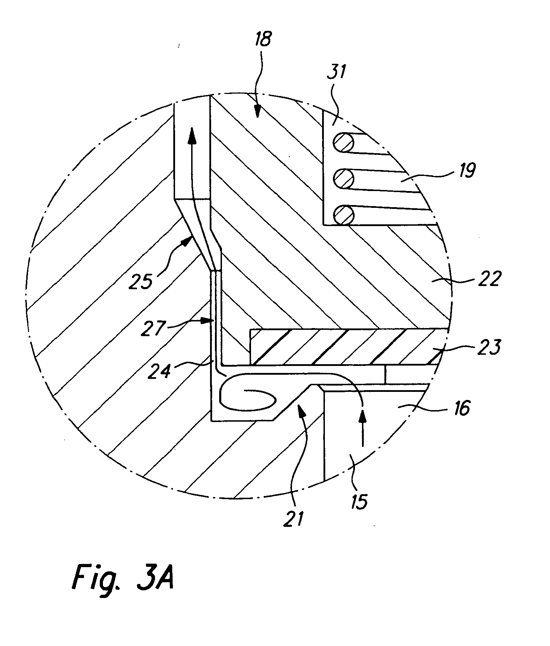

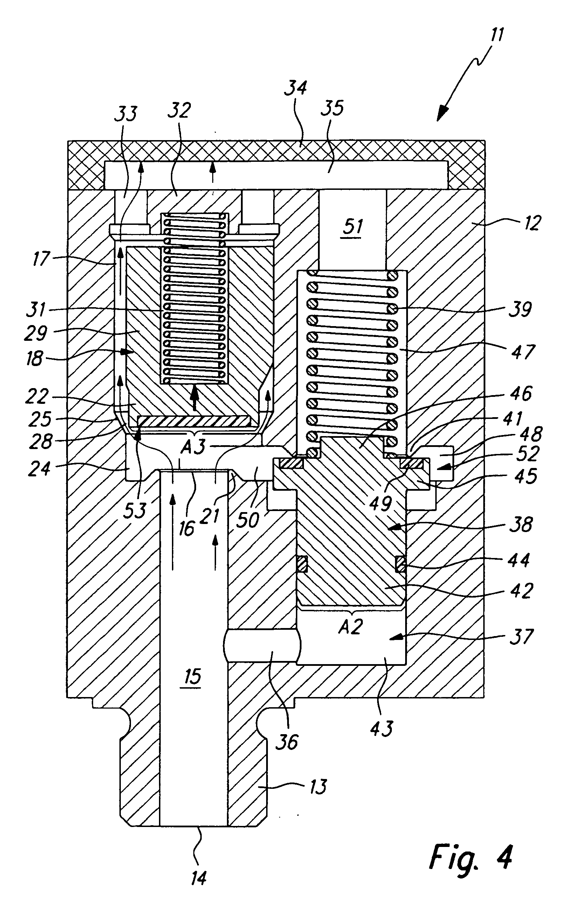

Wie insbesondere in Figur 3A dargestellt, befindet sich zwischen der Außenwand des Endabschnitts 22 und der Innenwand des Ventilkammer-Endbereichs 24 ein Spalt mit kleinem Öffnungsquerschnitt, falls der Endabschnitt 22 in den Ventilkammer-Endbereich 24 eingetaucht ist. Dieser Spalt bildet eine erste Drosselstelle 27 für die abströmende Druckluft. Befindet sich der Endabschnitt 22 des Ventilglieds 18 mit seiner Unterseite außerhalb des Ventilkammer-Endbereichs 24, also beispielsweise im Bereich des konusartigen Übergangsabschnitts 25 wie beispielhaft in Figur 4 dargestellt, so ist zwischen der Unterkante des Endabschnitts 22 und der Innenwand dieses konusartigen Übergangsabschnitts 25 ebenfalls ein größerer Öffnungsquerschnitt geöffnet, der als zweite Drosselstelle 28 für abströmende Druckluft dient.

Das Ventilglied 18 besitzt ferner noch einen Basisabschnitt 29 der von der Querschnittsform der Ventilkammer 17 abweicht. Der Basisabschnitt kann beispielsweise wie in Figur 7 dargestellt, eine rechteckige bzw. quadratische Grundform, gegebenenfalls mit abgerundeten Ecken, aufweisen. Dadurch, dass die Ventilkammer 17 zylindrisch ausgestaltet ist, werden zwischen den vier Seiten des rechteckigen bzw. quadratischen Basisabschnitts 29 und der Innenwand der Ventilkammer Abströmkanäle gebildet, über die Druckluft abströmen kann. Eine andere Ausführungsform ist in Figur 8 dargestellt, bei der der Basisabschnitt 29 sich von der Außenseite eines zylindrischen Ventilglieds 18 radial nach außen erstreckende Rippen 30 aufweist. Die Bereiche zwischen den einzelnen Rippen 30 sind von der Innenwand der Ventilkammer 17 beabstandet, so dass auch hier Abströmkanäle für Druckluft gebildet werden. Die Figuren 7 und 8 zeigen zudem, dass der Basisabschnitt 29 konusartig oder mit einem konusartigen Umriss (Figur 8) in den jeweiligen Endabschnitt 22 übergeht.

Der Basisabschnitt 29 besitzt ferner noch eine zentrische, sacklochartige Öffnung 31 mit zylindrischer Gestalt, in der die Federmittel 19, insbesondere in Form einer Schraubenfeder, aufgenommen ist. Die Schraubenfeder stützt sich dabei am Boden der Öffnung 31 ab. Die Schraubenfeder ragt ferner aus der Öffnung 31 hervor und stützt sich andererseits an einem an der Oberseite der Ventilkammer 17 ausgebildeten Widerlager 32 ab. An der Oberseite der Ventilkammer 1 befindet sich ferner ein Fluidauslass 33, beispielsweise in Form zweier Auslassöffnungen, über den Druckluft abströmen kann. Dem Fluidauslass 33 ist ferner ein zur Ventileinrichtung 11 gehörender Schalldämpfer 34 zugeordnet, der eine Schalldämpferkammer 35 aufweist, in die abströmende Druckluft zunächst einströmt bevor sie dann gegebenenfalls in die Umgebung gelangen kann.

Die Ventileinrichtung besitzt ferner einen Steuerkanal 36, der seitlich vom Einlasskanal 15 abzweigt und in eine Steuerkammer 37 mündet. In der Steuerkammer 37 befindet sich ein Steuerglied 38, das mittels Federmitteln 39 in einer Offenstellung 40 von einem Steuersitz 41 abgehoben gehalten ist. Das Steuerglied 38 ist ebenfalls als Plunger ausgebildet und besitzt eine Basispartie 42, die in einem Basisbereich 43 der Steuerkammer 37 geführt und gegenüber der Innenwand des Basisbereichs 43 mittels eines Dichtelementes 44, beispielsweise in Form eines O-Rings, fluiddicht abgedichtet ist.

An die Basispartie 42 des Steuerglieds 38 schließt sich eine Kopfpartie 45 an, die gegenüber der Basispartie 42 im Querschnitt erweitert ist. Die Kopfpartie 45 ist flanschartig ausgestaltet und besitzt an ihrer Oberseite einen von der Kopfpartie 45 nach oben abstehenden Führungszapfen 46, auf dem die Federmittel 39, insbesondere in Form einer Schraubenfeder, sitzen. Die Schraubenfeder stützt sich also an der Oberseite der Kopfpartie 45 ab. Radial außerhalb der Schraubenfeder befindet sich ein Dichtelement 49, beispielsweise in Form eines Dichtrings, der in fluiddichte Anlage mit dem Steuersitz 41 bewegbar ist, wobei der Steuersitz 41 seinerseits als kleine Erhebung an der Unterseite einer im Wesentlichen die Schraubenfeder aufnehmenden Mittelpartie 47 der Steuerkammer 37 ausgestaltet ist. Zwischen der Mittelpartie 47 und der Basispartie 42 der Steuerkammer befindet sich noch ein Steuerabschnitt 48 der Steuerkammer 37, der zur Aufnahme der Kopfpartie 45 des Steuerglieds 38 dient.

Die Ventilkammer 17 und der Steuerabschnitt 48 der Steuerkammer 37 sind über einen Verbindungskanal 50 miteinander verbunden. Schließlich befindet sich an der Oberseite der Steuerkammer 37 noch eine Auslasspartie 51, über die Druckluft zum Schalldämpfer 34 abströmen kann.

Figur 1 zeigt die Ausgangsstellung des Ventilglieds 18 bzw. Steuerglieds 38, falls beim an die Ventileinrichtung 11 angeschlossenen System kein Überdruck abgebaut werden muss. In dieser Situation ist die Ventileinrichtung 11 sozusagen außer Funktion. Das Ventilglied 18 wird hierbei über die Federmittel 19 auf den zugeordneten Ventilsitz 21 gedrückt, so dass die Ventilkammer-Öffnung 16 fluiddicht verschlossen ist. Druckluft steht dabei an einer Ventilgliedfläche A1 am Ventilglied 18 an. Der anstehende Druck reicht jedoch noch nicht aus, um das Ventilglied 18 zu öffnen. Gleichzeitig steht Druckluft über den Steuerkanal 36 an der Unterseite des Steuerglieds 38 an einer Steuergliedfläche A2 an. Das Steuerglied 38 ist mittels der Federkraft der Federmittel 39 vom zugeordneten Steuersitz 41 abgehoben. Die Steuergliedfläche A2 ist größer als die Ventilgliedfläche A1, beispielsweise beträgt das Verhältnis A1/A2 ungefähr 1:3.

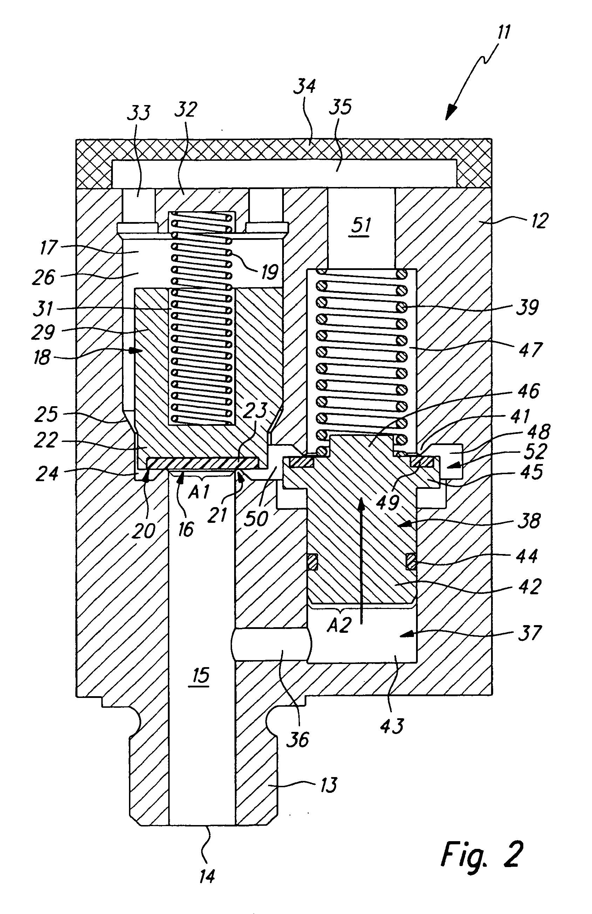

Steigt der Druck an, so wird zunächst das Steuerglied 38 entgegen der Federkraft der Federmittel 39 auf seinen zugeordneten Steuersitz 41 gedrückt, so dass der Fluiddurchgang zur Mittelpartie 47 und zur Auslasspartie 51 der Steuerkammer 37 fluiddicht verschlossen ist. Das Steuerglied nimmt seine in Figur 2 gezeigt Schließstellung 52 ein. Obwohl an der ersten Ventilgliedfläche A1 und an der Steuergliedfläche A2 derselbe Druck ansteht, wird das Steuerglied 38 in Folge der größeren Steuergliedfläche A2 und der damit verbundenen höheren Kraft zeitlich vor dem Ventilglied 18 betätigt.

Steigt der Druck nun weiter an und erreicht einen Öffnungsdruck, so wird das Ventilglied 18 entgegen der Federkraft der Federmittel 19 vom zugeordneten Ventilsitz 21 abgehoben. Diese Situation ist beispielhaft in Figur 3 bzw. 3A dargestellt. Das Ventilglied 18 hebt sich zunächst derart vom Ventilsitz 21 ab, dass der Endabschnitt 22 des Ventilglieds im Ventilkammer-Endbereich 24 verbleibt. Das heißt, Druckluft strömt zunächst über einen relativ kleinen Öffnungsquerschnitt über die sogenannte erste Drosselstelle 27 zwischen der Außenwand des Endabschnitts 22 und der Innenwand des Ventilkammer-Endbereichs 24 ab.

Steigt der Druck weiter an, entsteht auf Grund der ersten Drosselstelle 27 ein Staudruck im Raum unter der zweiten Ventilgliedsfläche A3. Auf Grund dieses Staudrucks, der auf die größere, vorzugsweise sehr viel größere Ventilgliedsfläche A3 (im Gegensatz zur ersten Ventilgliedsfläche A1) wirkt, entsteht eine wesentlich größere Kraft auf das Ventilglied 18 und bewegt dieses schnell weg vom Ventilsitz 21. Das Ventilglied 18 wird dabei in die Offenstellung 53 gefahren, bei der auf Grund der Geometrie von Ventilkammer-Innenwand und Ventilglied-Außenwand ein größerer Öffnungsquerschnitt bzw. Ringspalt entsteht und damit mehr Druckluft abströmen kann, bzw. ein höherer Durchfluss entsteht.

Das Ventilglied 18 kann also aus dem Ventilkammer-Endbereich 24 herausschnappen, beispielsweise in die in Figur 4 dargestellte Position innerhalb des konusartigen Übergangsabschnitts 25, wobei ein größer Öffnungsquerschnitt gebildet wird. Abströmende Druckluft steht in dieser Situation an einer zweiten Ventilgliedsfläche A3 an, die größer ist als die erste Ventilgliedsfläche A1. Mithin wirkt in dieser Situation eine in Folge der größeren zweiten Ventilgliedsfläche A3 größere Kraft, die das Ventilglied 18 in seiner in Figur 4 gezeigten Offenstellung 53 hält. Am Steuerglied hat sich die Situation nicht verändert, es wird nach wie vor durch den an der Unterseite der Basispartie 42 anstehenden Steuerdruck fluiddicht in Anlage an seinen zugeordneten Steuersitz 41 gehalten. Dabei ist der Verbindungskanal zwischen der Ventilkammer 17 und dem Steuerabschnitt 48 der Steuerkammer 37 abgesperrt.

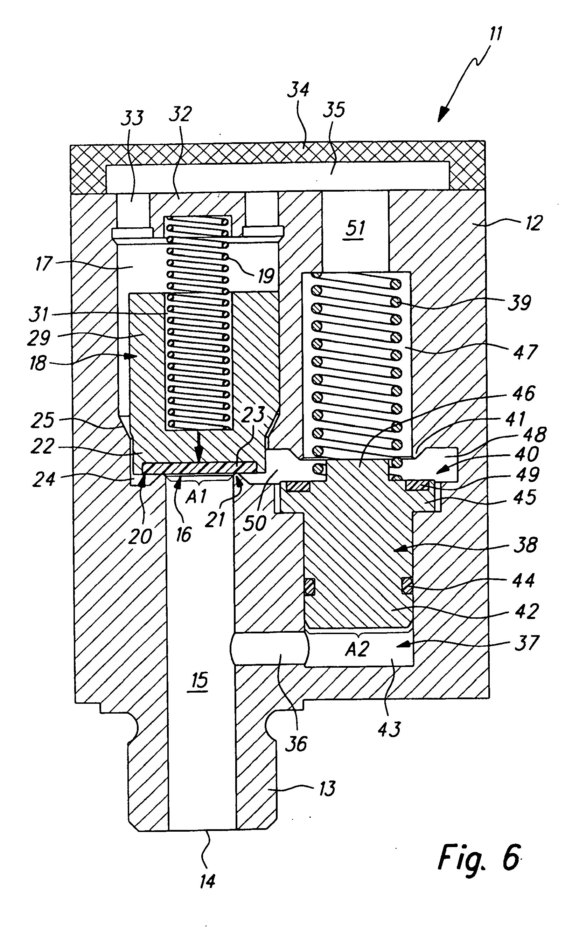

Bei geöffnetem Ventilglied 18 wird das zugeordnete System entlüftet, wodurch der Druck abfällt. Der niedrigere Druck reicht aber in Folge der größeren zweiten Ventilgliedsfläche A3 und der daraus resultierenden größeren Haltekraft dennoch aus, um das Ventilglied 18 in seiner Offenstellung 53 zu halten. Bei herkömmlichen Überdruckventilen müsste der Druck also noch weiter abfallen, bis es zu einem Schließvorgang des Ventilglieds 18 kommt. Bei der erfindungsgemäßen Ventileinrichtung 11 hingegen wird das Steuerglied 38 bei Unterschreiten des an der Basispartie 42 des Steuerglieds 38 anstehenden Steuerdrucks in Folge der Federkraft der Federmittel 39 wieder vom zugeordneten Steuersitz 41 abgehoben. Dadurch kann Druckluft über den Verbindungskanal 50 in die Steuerkammer 37 gelangen, so dass zusätzlich zur Entlüftung über die Ventilkammer 17 eine Entlüftung über die Steuerkammer 37 stattfindet. Gleichzeitig baut sich in der Schalldämpferkammer 35 ein Staudruck auf, der in Schließrichtung des Ventilglieds 18 wirkt. Durch das zusätzliche Entlüften über die Steuerkammer 37 wird das Ventilglied sehr viel schneller wieder in seine Schließstellung 20 zurückbewegt, wodurch ein unerwünschtes Abfallen des Drucks im angeschlossenen System verhindert werden kann. Mit der Entlüftung über die Steuerkammer 37 kann also eine Schnellschließung des Ventilglieds 18 realisiert werden. Das Ventilglied 18 kehrt folglich in seine in Figur 6 gezeigte Schließstellung 20 zurück.

## Patentansprüche

1. Ventileinrichtung, mit einem Ventilgehäuse (12), in dem sich ein Einlasskanal (15) für Druckfluid erstreckt, der in eine Ventilkammer (17) mündet, in der ein Ventilglied (18) mittels Federmitteln (19) in einer Schließstellung (20) in Anlage an einen Ventilsitz (21) gehalten ist, wobei sich das Ventilglied (18) bei einem definierten Öffnungsdruck des anstehenden Druckfluids öffnet, wodurch Druckfluid über einen Öffnungsquerschnitt zu einem Fluidauslass (33) gelangt und von dort ausströmt, wobei die Ventileinrichtung (11) einen mit dem Einlasskanal (15) verbundenen Steuerkanal (36) aufweist, über den Druckfluid in eine Steuerkammer (37) gelangt, in der ein Steuerglied (38) mittels Federmitteln in einer Offenstellung (40) von einem Steuersitz (41) abgehoben gehalten ist, wobei die Steuerkammer (37) über einen Verbindungskanal (50) mit der Ventilkammer (17) verbunden ist und wobei das Steuerglied (38) das Abströmen des Druckfluids derart steuert, dass das Steuerglied (38) vor dem Öffnen des Ventilglieds (18) bei einem unter dem Öffnungsdruck liegenden Steuerdruck in Anlage an seinen Steuersitz (41) bewegbar ist, wodurch der Fluiddurchgang zwischen Steuerkammer (37) und Ventilkammer (17) gesperrt ist, und dass in einer Offenstellung (53) des Ventilglieds (18) und Abströmen des Druckfluids über die Ventilkammer (17) das Steuerglied (38) bei Druckabfall unter den Steuerdruck in seine Offenstellung (40) bewegt und der Verbindungskanal (50) geöffnet wird, wodurch Druckfluid auch über die Steuerkammer (37) abströmen kann, **dadurch gekennzeichnet, dass** der für die abströmende Menge an Druckfluid maßgebliche Öffnungsquerschnitt durch einen Spalt zwischen der Außenwand des Ventilglieds (18) und der Innenwand der Ventilkammer (17) definiert ist, wobei die Innenwand der Ventilkammer (17) und die Außenwand des Ventilglieds (18) derart aufeinander abgestimmt sind, dass das Ventilglied (18) in mehrere Öffnungspositionen mit unterschiedlichen Öffnungsquerschnitten bewegbar und dort haltbar ist.

2. Ventileinrichtung nach Anspruch 1, **dadurch gekennzeichnet, dass** das Ventilglied (18) einen sich in Richtung Ventilsitz (21) verjüngenden Endabschnitt (22) aufweist, der mit einem gegenüber dem Rest der Ventilkammer (17) verjüngten Ventilkammer-Endbereich (24) derart korrespondiert, dass bei vom Ventilsitz abgehobenem Ventilglied (18) und Position des Ventilglied-Endabschnitts (22) innerhalb des Ventilkammer-Endbereichs (24) ein kleiner Öffnungsquerschnitt geöffnet ist und bei Position des Ventilglied-Endabschnitts (22) außerhalb des Ventilkammer-Endbereichs (24) ein demgegenüber größerer Öffnungsquerschnitt geöffnet ist.

3. Ventileinrichtung nach einem der vorhergehenden Ansprüche, **dadurch gekennzeichnet, dass** der Steuerkanal (36) vom Einlasskanal (15) abzweigt.

4. Ventileinrichtung nach einem der vorhergehenden Ansprüche, **dadurch gekennzeichnet, dass** die Ventileinrichtung (11) einen dem Fluidauslass (33) zugeordneten Schalldämpfer (34) aufweist, der bei abströmendem Druckfluid einen, die Schließbewegung des Ventilgliedes (18) unterstützenden Staudruck aufbaut.

5. Ventileinrichtung nach einem der vorhergehenden Ansprüche, **dadurch gekennzeichnet, dass** eine erste Ventilgliedfläche A1 an der Druckfluid in der Schließstellung (20) des Ventilglieds (18) ansteht kleiner ist als eine Steuergliedfläche A2, an der über den Steuerkanal zugeführtes Druckfluid am Steuerglied (38) ansteht.

6. Ventileinrichtung nach Anspruch 5, **dadurch gekennzeichnet, dass** das Flächenverhältnis A1/A2 ungefähr 1:3 ist.

7. Ventileinrichtung nach einem der vorhergehenden Ansprüche, **dadurch gekennzeichnet, dass** das Ventilglied (18) einen von der Querschnittsform der Ventilkammer (17) abweichenden Basisabschnitt (29) aufweist und zwischen der Außenwand des Basisabschnitts (29) und der Innenwand der Ventilkammer (17) mehrere Abströmkanäle für Druckfluid ausgebildet sind.

8. Ventileinrichtung nach einem der vorhergehenden Ansprüche, **dadurch gekennzeichnet, dass** das Ventilglied (18) und/oder das Steuerglied (38) plungerartig ausgestaltet ist.

## Claims

1. Valve device with a valve casing (12) in which extends an inlet passage (15) for pressurised fluid which opens out in a valve chamber (17) in which a valve member (18) is held by spring means (19) in a closed position (20) in contact with a valve seat (21), wherein the valve member (18) opens under a defined opening pressure of the applied pressurised fluid, whereby pressurised fluid reaches a fluid outlet (33) via an opening cross-section and from there flows out, wherein the valve device (11) has a control passage (36) connected to the inlet passage (15) and via which the pressurised fluid gains access to a control chamber (37) in which a control element (38) is held by spring means in an open position (40) raised from a control seat (41), wherein the control chamber (37) is connected via a connecting passage (50) to the valve chamber (17) and wherein the control element (38) controls the outflow of pressurised fluid in such a way that the control element (38) may be moved before the opening of the valve member (18), under a control pressure lying below the opening pressure, into contact with its control seat (41), whereby the fluid passage between control chamber (37) and valve chamber (17) is blocked, and that in an open position (53) of the valve member (18) and with outflow of the pressurised fluid through the valve chamber (17) the control element (38) moves, with a drop in pressure below the control pressure, into its open position (40) and the connecting passage (50) is opened, whereby pressurised fluid may also flow out through the control chamber (37), **characterised in that** the opening cross-section which is decisive for the outflowing quantity of pressurised fluid is defined by a gap between the outer wall of the valve member (18) and the inner wall of the valve chamber (17), wherein the inner wall of the valve chamber (17) and the outer wall of the valve member (18) are so adjusted to one another that the valve member (18) may be moved into and held in several opening positions with different opening cross-sections.

2. Valve device according to claim 1, **characterised in that** the valve member (18) has an end section (22) tapering towards the valve seat (21) and corresponding with a valve chamber end section (24), tapering in comparison with the rest of the valve chamber (17), in such a way that with the valve member (18) lifted from the valve seat and the valve member end section (22) positioned within the valve chamber end section (24) a smaller opening cross-section is made available, and with the valve member end section (22) positioned outside the valve chamber end section (24) a relatively larger opening cross-section is provided.

3. Valve device according to any of the preceding claims, **characterised in that** the control passage (36) branches off from the inlet passage (15).

4. Valve device according to any of the preceding claims, **characterised in that** the valve device (11) has a silencer (34) assigned to the fluid outlet (33) and which, with outflowing pressurised fluid, builds up a back-pressure which assists the closing movement of the valve member (18).

5. Valve device according to any of the preceding claims, **characterised in that** a first valve member surface A1 at which pressurised fluid is applied in the closed position (20) of the valve member (18) is smaller than a control member surface A2 at which pressurised fluid fed through the control passage is applied to the control element (38).

6. Valve device according to claim 9, **characterised in that** the A1/A2 surface ratio is approximately 1:3.

7. Valve device according to any of the preceding claims, **characterised in that** the valve member (18) has a base section (29) varying from the cross-sectional form of the valve chamber (17), and several outflow passages for pressurised fluid are formed between the outer wall of the base section (29) and the inner wall of the valve chamber (17).

8. Valve device according to any of the preceding claims, **characterised in that** the valve member (18) and/or the control element (38) are designed in plunger form.

## Revendications

1. Dispositif de soupape avec un boîtier de soupape (12), dans lequel un canal d'entrée (15) pour du fluide sous pression s'étend, lequel débouche dans une chambre de soupape (17), dans laquelle un organe de soupape (18) est maintenu en appui contre un siège de soupape (21) à l'aide de moyens de ressort (19) dans une position de fermeture (20), l'organe de soupape (18) ouvrant en cas de pression d'ouverture définie du fluide sous pression en place, par quoi du fluide sous pression parvient par le biais d'une section d'ouverture à une sortie de fluide (33) et s'écoule de là, le dispositif de soupape (11) présentant un canal de commande (36) relié au canal d'entrée (15), par lequel du fluide sous pression parvient dans une chambre de commande (37), dans laquelle un organe de commande (38) est maintenu relevé d'un siège de commande (41) à l'aide de moyens de ressort dans une position d'ouverture (40), la chambre de commande (37) étant reliée par un canal de liaison (50) à la chambre de soupape (17) et l'organe de commande (38) commandant l'écoulement du fluide sous pression de telle manière que l'organe de commande (38) puisse se déplacer avant l'ouverture de l'organe de soupape (18) en cas de pression de commande inférieure à la pression d'ouverture en appui contre son siège de commande (41), ce qui permet de bloquer le passage fluidique entre la chambre de commande (37) et la chambre de soupape (17), et en ce que dans une position d'ouverture (53) de l'organe de soupape (18) et dans l'écoulement du fluide sous pression par la chambre de soupape (17), l'organe de commande (38) se déplace en cas de chute de pression sous la pression de commande dans sa position ouverte (40) et le canal de liaison (50) est ouvert, ce qui permet au fluide sous pression de s'écouler aussi par la chambre de commande (37), **caractérisé en ce que** la section d'ouverture prédominante pour la quantité d'écoulement de fluide sous pression est définie par une fente entre la paroi extérieure de l'organe de soupape (18) et la paroi intérieure de la chambre de soupape (17), la paroi intérieure de la chambre de soupape (17) et la paroi extérieure de l'organe de soupape (18) étant adaptées l'une à l'autre de telle manière que l'organe de soupape (18) soit mobile dans plusieurs positions d'ouvertures avec différentes sections d'ouverture et puisse y être maintenu.

2. Dispositif de soupape selon la revendication 1, **caractérisé en ce que** l'organe de soupape (18) présente une section d'extrémité (22) se rétrécissant en direction du siège de soupape (21), qui correspond à une zone d'extrémité de chambre de soupape (24) rétrécie par rapport au reste de la chambre de soupape (17) de telle manière que lorsque l'organe de soupape (18) est relevé du siège de soupape et la section d'extrémité d'organe de soupape (22) est positionnée dans la zone d'extrémité de chambre de soupape (24), une petite section d'ouverture est ouverte et lorsque la position de la section d'extrémité d'organe de soupape (22) est en dehors de la zone d'extrémité de chambre de soupape (24), une section d'ouverture plus grande au contraire est ouverte.

3. Dispositif de soupape selon l'une quelconque des revendications précédentes, **caractérisé en ce que** le canal de commande (36) se détache du canal d'entrée (15).

4. Dispositif de soupape selon l'une quelconque des revendications précédentes, **caractérisé en ce que** le dispositif de soupape (11) présente un amortisseur de bruit (34) associé à la sortie de fluide (33) qui constitue une pression de retenue favorisant le mouvement de fermeture de l'organe de soupape (18) lorsque le fluide sous pression s'écoule.

5. Dispositif de soupape selon l'une quelconque des revendications précédentes, **caractérisé en ce qu'**une première surface d'organe de soupape A1, sur laquelle se trouve du fluide sous pression dans la position de fermeture (20) de l'organe de soupape (18), est inférieure à une surface d'organe de commande A2, sur laquelle se trouve du fluide sous pression amené par le canal de commande sur l'organe de commande (38).

6. Dispositif de soupape selon la revendication 5, **caractérisé en ce que** le rapport de surface A1/A2 s'élève approximativement à 1:3.

7. Dispositif de soupape selon l'une quelconque des revendications précédentes, **caractérisé en ce que** l'organe de soupape (18) présente une section de base (29) divergeant de la forme de section de la chambre de soupape (17) et plusieurs canaux d'écoulement pour du fluide sous pression sont réalisés entre la paroi extérieure de la section de base (29) et la paroi intérieure de la chambre de soupape (17).

8. Dispositif de soupape selon l'une quelconque des revendications précédentes, **caractérisé en ce que** l'organe de soupape (18) et/ou l'organe de commande (38) est configuré comme un piston plongeur.
